# EUROPEAN PATENT SPECIFICATION

(11) **EP 0 528 581 B1**
(45) Date of publication and mention of the grant of the patent: **16.10.1996**
(21) Application number: 92307110.4
(22) Date of filing: 04.08.1992
(51) Int. Cl.: C08L 77/06, C08L 71/12, C23C 18/16

(54) **Polyamide resin composition having excellent electroless platability**
Sehr gut stromlos plattierbare Polyamid-Harz-Masse
Composition de résine polyamide avec excellente susceptibilité au dépôt sans courant électrique

(30) Priority: 16.08.1991 JP 229628/91
(43) Date of publication of application: 24.02.1993
(73) Proprietor: MITSUBISHI GAS CHEMICAL COMPANY, INC., Tokyo, 100 (JP)
(72) Inventor: Watanabe, Noriyoshi, Plastics Center of Mitsubishi, Hiratsuka-shi, Kanagawa-ken (JP); Morishige, Kiyoshi, Plastics Center of Mitsubishi, Hiratsuka-shi, Kanagawa-ken (JP)
(74) Representative: Votier, Sidney David

(56) References cited:
- EP-A- 0 302 485
- EP-A- 0 357 065
- US-A- 877 847

## Description

The present invention relates to a polyamide resin composition having excellent electroless platability. More specifically, it relates to a light-weight polyamide resin composition having excellent electroless platability, which is excellent in water resistance, chemical resistance, mechanical properties, flowability in molding and rigidity and has improved strength in a weld portion, and which rarely causes warping.

With an advance in decreasing the size and weight of electronic equipments such as household appliances and office automation machines, there is a demand for decreasing the thickness and weight of housings of these appliances and machines. In recent years, these housings are produced from such materials as an ABS resin, an AS resin and a polyphenylene ether resin which are less expensive and excellent in appearance finish. Since, however, these materials are insufficient in rigidity or show low flowability in molding, it is difficult to decrease the size and weight of housings by decreasing their thickness.

Meanwhile, being excellent in rigidity and flowability, a molding material composed mainly of a m-xylylene-containing polyamide resin is suitable for decreasing the size and weight of the housings by decreasing their thickness. Since, however, this molding material is insufficient in electroless platability for EMI shielding properties which the housings are required to have, it is not satisfactory in practical use.

U. S. Patent 4,877,847 discloses a polyphenylene ether resin composition comprising a polyphenylene ether resin modified with a 1,2-substituted olefin compound having an acid anhydride group, and a polyamide resin having recurring units derived from xylylene diamine and a linear-structured aliphatic dicarboxylic acid having 6 to 12 carbon atoms. The above U. S. Patent describes that the polyphenylene ether resin composition is excellent in moisture absorption characteristics, moldability, mechanical properties and impact strength.

It is an object of the present invention to provide a polyamide resin composition having excellent electroless platability.

It is another object of the present invention to provide a polyamide resin composition which shows well-balanced performance, i.e., is excellent in water resistance, chemical resistance, flowability in molding, mechanical properties, rigidity and strength in a weld portion, which rarely causes warping, and which is excellent in electroless platability.

It is still another object of the present invention to provide a polyamide resin composition which shows excellence in the above performances as a material for thin and light-weight housings for electronic equipments.

Other objects and advantages of the present invention will be apparent from the following description.

According to the present invention, the above objects and advantages of the present invention are, first, achieved by a polyamide resin composition having excellent electroless platability,
(A) which comprises;
   (a) a xylylene group-containing polyamide resin,
   (b) a modified polyphenylene ether resin obtained by reacting a polyphenylene resin with an unsaturated aliphatic carboxylic acid or an anhydride thereof,
   (c) at least one member selected from the group consisting of a carbon fiber and a glass fiber, and
   (d) at least one member selected from the group consisting of a potassium titanate fiber, wollastonite and calcined kaolin,
(B) wherein per 100 parts by weight of the above components (a) and (b), the amount of the component (a) is 30 to 80 parts by weight, the amount of the component (b) is 70 to 20 parts by weight, the amount of the component (c) is 5 to 30 parts by weight and the amount of the component (d) is 5 to 25 parts by weight.

As the xylylene group-containing polyamide resin used in the present invention, preferred is a polyamide obtained from xylylenediamine as a diamine component.

The xylylene group-containing polyamide resin (to be sometimes referred to as "MX nylon" hereinafter) used in the present invention includes a polyamide resin obtained by polycondensing, e.g., either m-xylylenediamine alone or a diamine mixture of at least 60 % by weight of m-xylylenediamine with not more than 40 % by weight of p-xylylenediamine and α, ω-linear aliphatic dibasic acid having 6 to 12 carbon atoms such as adipic acid, sebacic acid, suberic acid, undecanoic acid or dodecanoic acid.

The MX nylon in which adipic acid is used as the α, ω-linear aliphatic dibasic acid is particularly preferable in view of the balance between moldability and physical properties.

The polyphenylene ether resin used in the present invention preferably has the structural unit of the following formula in its main chain. 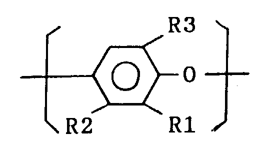 wherein R₁ is a lower alkyl group having 1 to 3 carbon atoms, and each of R₂ and R₃ is a hydrogen atom or a lower alkyl group having 1 to 3 carbon atoms.

The polyphenylene ether resin may be any one of a homopolymer, a copolymer and a graft polymer.

The polyphenylene ether resin includes, for example, poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether and poly(2-methyl -6-propyl-1,4-phenylene)ether. Particularly preferred are poly(2,6-dimethyl-1,4-phenylene)ether, a copolymer of 2,6-dimethylphenol and a 2,3,6-trimethylphenol and graft copolymers obtained by grafting styrene to these.

The modified polyphenylene ether resin used in the present invention is obtained, for example, by melt-mixing a polyphenylene ether resin with an unsaturated aliphatic carboxylic acid or an anhydride thereof in the absence of a catalyst or by allowing these components to react in the presence of a catalyst.

When an anhydride of an unsaturated aliphatic carboxylic acid is used, the modified polyphenylene ether resin can be easily produced by reacting the anhydride and a polyphenylene ether resin in a melt-mixed state in the absence of a catalyst.

For the above melt-mixing, there may be used a kneader, a Banbury mixer, an extruder, etc., without any special limitation. In view of processability, an extruder is preferred.

The anhydride of an unsaturated aliphatic carboxylic acid includes maleic anhydride, itaconic anhydride and citraconic anhydride. Of these, preferred is maleic anhydride.

The amount of the above carboxylic acid or the anhydride thereof for the modification of the polyphenylene ether resin is 0.01 to 10 parts by weight, preferably 0.1 to 1 part by weight, per 100 parts by weight of the polyphenylene ether resin. When this amount is less than 0.01 part by weight, there is little effect on the improvement in the compatibility between the polyphenylene ether resin and the xylylene group-containing polyamide resin, and it is difficult to obtain a composition having toughness. When the above amount exceeds 10 parts by weight, excess carboxylic acid or excess anhydride thereof is thermally decomposed to cause such disadvantages in practical use as a decrease in heat resistance and a defective appearance. When the unsaturated aliphatic carboxylic acid is used for the modification of the polyphenylene ether resin, a radical-generating agent may be optionally used as a catalyst. The radical-generating agent includes, for example, benzoyl peroxide, dicumyl peroxide and cumene hydroperoxide.

The polyamide resin composition of the present invention further contains one or both of a carbon fiber and a glass fiber.

Any carbon fiber may be used in the present invention if it works as a reinforcement for the resin The carbon fiber may have the form of a roving or chopped strand. The carbon fiber length is generally 0.1 to 25 mm, preferably 1 to 6 mm, and the average diameter of the carbon fiber is preferably 7 to 20 µm.

When the fiber is too long, the degree of warping of a molded article increases. When it is too short, there is little effect on the reinforcement of the strength and rigidity.

The carbon fiber may be a carbon fiber obtained from PAN or a carbon fiber obtained from pitch.

Any glass fiber may be used in the present invention if it works as a reinforcement for the resin The glass fiber may have the form of a roving or chopped strand. The glass fiber length is generally 0.1 to 10 mm, preferably 1 to 6 mm, and the average diameter of the glass fiber is preferably 7 to 20 µm.

When the fiber is too long, the degree of warping of a molded article increases. When it is too short, there is little effect on the reinforcement of the strength and rigidity.

The polyamide resin composition further contains at least one member selected from the group consisting of a potassium titanate fiber, wollastonite and calcined kaolin.

The potassium titanate fiber or wollastonite used in the present invention is of a fine needle-like crystal form and has a smaller L/D ratio (fiber length/fiber diameter ratio) than a carbon fiber and a glass fiber. Therefore, it not only has an effect on the prevention of warping and improvement of a weld portion in strength but also has an effect on the improvement of a molded article in rigidity.

On the other hand, calcined kaolin is of fine particles having a layer structure, and like a potassium titanate fiber or wollastonite, it not only has an effect on the prevention of warping and improvement of a weld portion in strength but also has an effect on the improvement of a molded article in rigidity.

Further, the polyamide resin composition containing the above components, provided by the present invention, can easily undergo excellent etching with an aqueous solution of inorganic acid. Therefore, the polyamide resin composition of the present invention permits the formation of a uniform plated layer having high adhesion strength and excellent gloss on a surface of a molded article formed thereof, and it can be imparted with electroless platability with copper to give an EMI shielding effect.

The potassium titanate fiber used in the present invention preferably has a fiber diameter of 0.2 to 2.5 µm and a fiber length of 10 to 100 µm. When it has a fiber diameter of 2.5 µm or less and a fiber length of 100 µm or less, there can be obtained a molded article having excellent surface smoothness and excellent electroless platability with copper.

The average particle diameter of the wollastonite used in the present invention is preferably not more than 45 µm, more preferably not more than 20 µm. When the wollastonite has an average particle diameter of not more than 45 µm, there can be obtained a molded article having excellent surface smoothness and excellent electroless platability with copper.

The calcined kaolin used in the present invention preferably has an average particle diameter of not more than 20 µm. When the calcined kaolin has an average particle diameter of not more than 20 µm, there can be obtained a molded article having excellent surface smoothness and excellent electroless platability with copper.

The potassium titanate fiber, wollastonite or calcined kaolin used in the present invention may either that which is not surface-treated or that which is surface-treated with a coupling agent such as a silane coupling agent or a titanate coupling agent. Preferred are those which are surface treated with the coupling agent.

The polyamide resin composition of the present invention contains 30 to 80 parts by weight of the xylylene-containing polyamide resin (a) and 70 to 20 parts by weight of the modified polyphenylene ether resin (b) per 100 parts by weight of the total amount of the xylylene-containing polyamide resin (a) and the modified polyphenylene ether resin (b).

When the amount of the modified polyphenylene ether resin (b) exceeds 70 parts by weight per 100 parts by weight of the components (a) and (b), the resultant composition shows poor flowability and decreased moldability.

When the amount of the modified polyphenylene ether resin (b) is less than 20 parts by weight per 100 parts by weight of the components (a) and (b), the resultant composition has a large mold shrinkage ascribed to the crystallinity of the polyamide resin and gives a molded article showing insufficient improvement on warping.

The preferred amounts of the polyamide resin (a) and the modified polyphenylene ether resin (b) are respectively 50 to 70 parts by weight and 50 to 30 parts by weight per 100 parts by weight of the total amount of the component (a) and the component (b).

The amount of the carbon fiber and/or glass fiber (c) to be used in the invention is 5 to 30 parts by weight per 100 parts by weight of the total amount of the polyamide resin (a) and the polyphenylene ether resin (b).

When the amount of the carbon fiber and/or glass fiber (c) is less than 5 parts by weight, the reinforcement of the strength and rigidity can not be achieved.

When the amount of the carbon fiber and/or glass fiber (c) exceeds 30 parts by weight, a composition is difficult to produce, and even if obtained, the resultant composition shows a decreased flowability in injection molding, and consequently, it is difficult to produce an article having a small thickness.

The preferred amount of the carbon fiber and/or glass fiber (c) is 10 to 20 parts by weight.

The amount of the potassium titanate fiber, wollastonite or calcined kaolin (d) is 5 to 25 parts by weight per 100 parts by weight of the total amount of the polyamide resin (a) and the modified polyphenylene ether resin (b).

When the amount of the potassium titanate fiber, wollastonite or calcined kaolin to be used in the invention is less than 5 parts by weight, the resultant composition shows neither any effect on the prevention of warping nor any effect on the improvement in rigidity.

When the amount of the potassium titanate fiber, wollastonite or calcined kaolin exceeds 25 parts by weight, the resultant composition has too high a specific gravity, or shows decreased flowability in injection molding. As a result, it is difficult to produce a molded article having a small thickness, and the adhesion of an electroless plating is insufficient.

The preferred amount of the potassium titanate fiber, wollastonite or calcined kaolin (d) is 10 to 20 parts by weight.

The resin composition of the present invention preferably has a specific gravity of not more than 1.45.

When the resin composition of the present invention has a specific gravity of not more than 1.45, it can be practically advantageously used for electronic equipments, since it contributes toward decreasing the machine weight.

The resin composition of the present invention preferably has a flexural modulus, measured according to ASTM D790, of at least 70,000 kgf/cm², more preferably at least 100,000 kgf/cm².

When the above flexural modulus is less than 70,000 kgf/cm², the deflection of a molded article under a load becomes large, and it may be therefore difficult to obtain a molded article having a small thickness.

The resin composition of the present invention has the following flowability. When it is measured for a bar flow length, as a flowability index of a resin composition, by flowing it in a cavity having a depth of 1 mm and a width of 20 mm at a resin temperature of 280° C, at a mold temperature of 130° C at an injection pressure of 1,100 kgf/cm², the bar flow length is at least 100 mm, preferably at least 120 mm.

When the bar flow length is less than 100 mm, the charging of the composition is defective, or the resultant molded article has a defective appearance. It is therefore difficult to produce the intended molded article having a small thickness and a light weight.

According to the present invention, there are further provided a composition obtained by incorporating a hydrogenated, A-B-A type block copolymer elastomer to the above resin composition (to be sometimes referred to as "first composition" hereinafter) of the present invention, and compositions obtained by replacing part of the xylylene group-containing polyamide of each of the above resin compositions of the present invention with polyamide 66.

That is, according to the present invention, there is provided, as a first variant, a polyamide resin composition (to be referred to as a "second composition" hereinafter) having excellent electroless platability,
(A) which comprises the above components (a), (b), (c) and (d) and
   (e) a hydrogenated, A-B-A type block copolymer elastomer, in which each of A's is a polymer block of a vinyl aromatic hydrocarbon and B is a polymer block of a conjugated diene hydrocarbon,
(B) wherein per 100 parts by weight of the above components (a) and (b), the amount of the component (a) is 30 to 80 parts by weight, the amount of the component (b) is 70 to 20 parts by weight, the amount of the component (c) is 5 to 30 parts by weight, the amount of the component (d) is 5 to 25 parts by weight, and the amount of the component (e) is 1 to 15 parts by weight.

As a second variant, there is provided a polyamide resin composition (to be referred to as a "third composition" hereinafter) having excellent electroless platability,
(A) which comprises
   (a′) a polyamide resin containing 40 to 99 % by weight of a xylylene group-containing polyamide resin and 60 to 1 % by weight of polyamide 66, and the components (b), (c) and (d),
(B) wherein per 100 parts by weight of the above components (a′) and (b), the amount of the component (a′) is 30 to 80 parts by weight, the amount of the component (b) is 70 to 20 parts by weight, the amount of the component (c) is 5 to 30 parts by weight, and the amount of the component (d) is 5 to 25 parts by weight.

As a third variant, there is provided a polyamide resin composition (to be referred to as "fourth composition" hereinafter) having excellent electroless platability,
(A) which comprises the above components (a′), (b), (c), (d) and (e),
(B) wherein per 100 parts by weight of the above components (a′) and (b), the amount of the component (a′) is 30 to 80 parts by weight, the amount of the component (b) is 70 to 20 parts by weight, the amount of the component (c) is 5 to 30 parts by weight, the amount of the component (d) is 5 to 25 parts by weight, and the amount of the component (e) is 1 to 15 parts by weight.

The component (e) used in the above second and fourth compositions is a hydrogenated block copolymer elastomer and has an A-B-A block structure. A and B are respectively a polymer block. Before the hydrogenation, the central block B is a block of a polymer of a conjugated diene hydrocarbon compound, preferably a polybutadiene block. After the hydrogenation, the central block B is a block in which the double bonds of the above polymer, e.g., polybutadiene have been saturated with hydrogen, i.e., the polymer is converted to a saturated hydrocarbon. Each of the terminal blocks A's is a block of a polymerized vinyl aromatic hydrocarbon, preferably a block of polystyrene.

The number average molecular weight of the terminal block A is preferably 4,000 to 115,000, more preferably 5,000 to 80,000. The number average molecular weight of the central block B is preferably 20,000 to 450,000, more preferably 25,000 to 100,000.

The component (a′) used in each of the third and fourth compositions is a polyamide resin obtained by replacing part of the xylylene group-containing polyamide resin of the component (a) of the first or second composition with polyamide 66. This polyamide resin (a′) contains 40 to 99 % by weight, preferably 60 to 95 parts by weight, of a xylylene group-containing polyamide resin and 60 to 1 % by weight, preferably 40 to 5 parts by weight, of polyamide 66.

Polyamide 66 gives an effect on the moldability of the composition, i.e., a decrease in a molding cycle time.

The amount of the polyamide 66 relative to MX nylon may be varied in a wide range if considered from the viewpoint of only a decrease in a molding cycle time. However, if the physical performance of the resin composition is considered in combination, the amount of the polyamide 66 is required to be set in the above range.

When the amount of the polyamide 66 is less than the above lower limit, there is little effect on a decrease in the molding cycle time. When it is larger than the above upper limit, the resultant composition practically disadvantageously shows a large decrease in strength and a large deformation in dimension due to water absorption.

The amount of the component (e) in the second composition is 1 to 15 parts by weight, preferably 3 to 10 parts by weight per 100 parts by weight of total amount of the xylylene group-containing polyamide resin (a) and the modified polyphenylene ether resin (b).

The amount of the component (e) in the fourth composition is 1 to 15 parts by weight, preferably 3 to 10 parts by weight per 100 parts by weight of total amount of the polyamide resin (a′) and the modified polyphenylene ether resin (b).

The compositions containing the component (e) in the above amount, provided by the present invention, is improved in impact resistance in particular.

The amount of the component (a′) in each of the third and fourth compositions is 30 to 80 parts by weight, preferably 50 to 70 parts by weight, per 100 parts by weight of the total amount of the component (a′) and the component (b).

It should be understood that the foregoing explanation on the first composition can be applied to other explanation on the second, third and fourth compositions.

Further, the resin composition of the present invention may contain a variety of additives used for polymer materials, such as a stabilizer, a flame retardant, a pigment, a mold-releasing agent, a lubricant and a filler, as required.

The resin composition of the present invention can be produced by melt-kneading the above components with an ordinary single-screw or twin-screw extruder.

The polyamide resin composition of the present invention is suitable for producing shaped articles such as housings of electronic equipments required to have EMI shielding, e.g., electric household appliances and office automation machines, and these shaped articles can be decreased in thickness and weight. These shaped articles are electrolessly plated to have EMI shielding properties.

The present invention will be explained more specifically by reference to Examples, in which "part" stands for "part by weight" unless otherwise specified.

The injection molding conditions in Examples 1 to 5 and Comparative Examples 1 and 2 are as follows. Resin temperature; 280° C, mold temperature; 130° C, and injection pressure; 1,100 kgf/cm². The injection molding conditions in Comparative Example 3 were resin temperature; 300° C, mold temperature; 130° C, and injection pressure; 1,100 kgf/cm².

Samples were evaluated as follows.
1) Specific gravity: ASTM D792
2) Flexural strength: ASTM D790
3) Flexural modulus: ASTM D 790
4) Flow length: Samples in Examples 1 to 5 and Comparative Examples 1 and 2 were measured for flow length (bar flow length) by means of a mold with a flow path having a width of 20 mm and a depth of 1 mm (mold temperature: 130° C) at a resin temperature of 280° C at an injection pressure of 1,100 kgf/cm². Samples of Comparative Example 3 was measured at a resin temperature of 300° C at an injection pressure of 1,100 kgf/cm².
5) Moldability: Samples were evaluated when molded into a square plate having a size of 90 x 90 x 1 mm and a disk having a diameter of 4" and a thickness of 1/16".
The ratings of the results of the moldability evaluation in Tables 3 and 4 are as follows.
Yes: Samples were excellent flowability in molding, and moldable into the square plate and disk.
No: Samples were poor in flowability in molding, and unmoldable into the square plate and disk.
6) Warping: 24 Hours after the molding of the above plate and disk, the plate and disk were measured for flatness with a three coordinate measuring machine.
7) Adhesion of plating: Samples under normal conditions (23° C) and samples subjected to the following heat cycle treatment were measured according to a tape test based on ASTM D3359 (method B; crosscut test).
Heat cycle treatment: 1 h/85° C - 1 h/23° C, 50 % RH - 1 h/29° C - 1 h/23° C, 50 % RH as one cycle: This cycle was repeated three times.
The adhesion ratings are as follows:
5B no peeling
4B peeling of less than 5 %
3B peeling of 5 to 15 % (exclusive)
2B peeling of 15 to 35 % (exclusive)
1B peeling of 35 to 65 % (exclusive)
0B peeling of 65 % or more

8) Plating step A: Carried out by the methods described in the following Table 1.

**Table 1**

| Processing step | Composition of treating solution | Treating conditions |
|---|---|---|
| Degreasing | Ace Clean A-220 supplied by Okuno Chemical Industries Co., Ltd: 50 g/l | 50° C, 5 min. |
| Etching | chromic acid: 400 g/l sulfuric acid: 400 g/l | 45° C, 2 min. |
| Neutralizing | hydrochloric acid: 140 ml/l | 25° C, 2 min. |
| Conditioning | B-200 neutralizer, supplied by Okuno Chemical Industries Co., Ltd: 200 ml/l | 40° C, 4 min. |
| Catalyzing | Catalyst C, supplied by Okuno Chemical Industries Co., Ltd: 50 ml/l hydrochloric acid: 150 ml/l | 25° C, 3 min. |
| Accelerating | sulfuric acid: 100 ml/l | 40° C, 4 min. |
| Electroless copper plating | TMP chemical copper plating bath, supplied by Okuno Chemical Industries Co., Ltd | 40° C, 8 min. |
| Electroless nickel plating | TMP chemical nickel plating bath, supplied by Okuno Chemical Industries Co., Ltd | 40° C, 3 min. |

Plating step B: Carried out by the method described in the following Table 2.

**Table 2**

| Processing step | Composition of treating solution | Treating conditions |
|---|---|---|
| Etching | hydrochloric acid: 250 ml/l Etchant, supplied by Okuno Chemical Industries Co., Ltd: 300 ml/l | 35° C, 10 min. |
| Neutralizing | hydrochloric acid: 50 ml/l | 35° C, 5 min. |
| Catalyzing | Enilex CT, supplied by Ebara Udylite Co., Ltd: 200 ml/l hydrochloric acid: 50 ml/l | 35°C, 5 min. |
| Accelerating | sulfuric acid: 100 ml/l | 35° C, 10 min. |
| Post-accelerating | NaOH: 10 g/1 NaH₂PO₅·H₂O:20 g/l | 35° C, 3 min. |
| Electroless copper plating | TMP chemical copper plating bath, supplied by Okuno Chemical Industries Co., Ltd | 40°C, 8 min. |
| Electroless nickel plating | TMP chemical nickel plating bath, supplied by Okuno Chemical Industries Co., Ltd | 40° C, 3 min. |

### 9) Flame class

Strips of molded article samples having 0.8 mm in thickness were evaluated according to UL 94.

### Example 1

25 Grams of maleic anhydride was added in 5 kg of polyphenylene ether (to be sometimes referred to PPE hereinafter) having an intrinsic viscosity, measured in chloroform at 25° C, of 0.45 dl/g, and these were mixed with a super mixer for 3 minutes. Then, the mixture was melt-kneaded with a twin-screw extruder while it was melted under heat, to give a maleic anhydride-modified PPE (to be sometimes referred to as "modified PPE" hereinafter).

40 Parts of the modified PPE, 60 parts of poly-m-xylyleneadipamide (to be referred to as polyamide MXD6 hereinafter) obtained by polycondensation of m-xylylenediamine and adipic acid and having a number average molecular weight of 16,000, 10 parts of a carbon fiber (average fiber diameter: 10 µm, average chop length; 6 mm) and 10 parts of a potassium titanate fiber (treated with aminosilane) were dry-blended with a tumbler, and then melt-mixed with an extruder set at 285° C to give a resin composition.

The above-obtained resin composition was injection-molded with an injection molding machine to obtain test pieces according to ASTM. The test pieces were electrolessly plated with copper and further electrolessly plated with nickel according to the plating step A. Table 3 shows the components of the composition, the mixing ratio of the components and the evaluation results.

### Example 2

A rubber-containing, maleic anhydride-modified PPE was obtained in the same manner as in Example 1 except that 5 parts, per 35 parts of PPE, of a polystyrene-ethylene-butylene block copolymer (Kraton G1650, supplied by Shell Chemical Co.) was additionally added as a rubber component. Then, a resin composition was obtained in the same manner as in Example 1 except that this rubber-containing, maleic anhydride-modified PPE and polyamide 66 were used.

The above-obtained resin composition was injection-molded with an injection molding machine to obtain test pieces according to ASTM. The test pieces were electrolessly plated in the same manner as in Example 1. Table 3 shows the components of the composition, the mixing ratio of the components and the results of evaluation of the test pieces.

### Example 3

The same maleic anhydride-modified PPE as that used in Example 2, polyamide MXD6, polyamide 66, a carbon fiber and wollastonite were dry-blended with a tumbler in a weight ratio shown in Table 3, and then, a composition was obtained in the same manner as in Example 1. The so-obtained resin composition was injection-molded with an injection molding machine to obtain test pieces according to ASTM. The test pieces were electrolessly plated in the same manner as in Example 1. Table 3 shows the components of the composition, the mixing ratio of the components and the results of evaluation of the test pieces.

### Example 4

The same maleic anhydride-modified PPE as that used in Example 2, polyamide MXD6, polyamide 66, a glass fiber and wollastonite were dry-blended with a tumbler in a weight ratio shown in Table 3, and then, a composition was obtained in the same manner as in Example 1. The so-obtained resin composition was injection-molded with an injection molding machine to obtain test pieces according to ASTM. The test pieces were electrolessly plated in the same manner as in Example 1. Table 3 shows the components of the composition, the mixing ratio of the components and the results of evaluation of the test pieces.

### Example 5

The same maleic anhydride-modified PPE as that used in Example 2, polyamide MXD6, polyamide 66, a glass fiber and calcined kaolin were dry-blended with a tumbler in a weight ratio shown in Table 3, and then, a composition was obtained in the same manner as in Example 1. The so-obtained resin composition was injection-molded with an injection molding machine to obtain test pieces according to ASTM. The test pieces were electrolessly plated in the same manner as in Example 1. Table 3 shows the components of the composition, the mixing ratio of the components and the results of evaluation of the test pieces.

### Example 6

The same maleic anhydride-modified PPE as that used in Example 2, polyamide MXD6, polyamide 66, a rubber component, a carbon fiber, wollastonite and red phosphorus were dry-blended with a tumbler in a weight ratio shown in Table 3, and then, a composition was obtained in the same manner as in Example 1. The so-obtained resin composition was injection-molded with an injection molding machine to obtain test pieces according to ASTM. The test pieces were electrolessly plated in the same manner as in Example 1. Table 3 shows the components of the composition, the mixing ratio of the components and the results of evaluation of the test pieces.

In the above Examples 1 to 6, all the compositions showed excellent moldability, and all the test pieces showed high flexural moduli. Further, all the compositions were free from warping in molding, and all the test pieces showed excellent electroless platability. Therefore, these compositions and molded articles therefrom are satisfactory in practical use.

**Table 3**

| EXAMPLE NO. | 1 | 2 | 3 | 4 | 5 | 6 |
|---|---|---|---|---|---|---|
| COMPONENT & CONTENT | | | | | | |
| Polyamide MXD6 | 60 | 50 | 50 | 50 | 50 | 49 |
| Polyamide 66 | - | 10 | 10 | 10 | 10 | 9 |
| Modified PPE | 40 | 35 | 35 | 35 | 35 | 35 |
| Rubber component | - | 5 | 5 | 5 | 5 | 5 |
| Carbon fiber | 10 | 10 | 10 | - | - | 10 |
| Glass fiber | - | - | - | 10 | 15 | - |
| Potassium titanate fiber | 10 | 10 | - | - | - | - |
| Wollastonite | - | - | 10 | 10 | - | 10 |
| Calcined kaolin | - | - | - | - | 10 | - |
| Red phosphorus | - | - | - | - | - | 2 |
| Specific gravity | 1.29 | 1.27 | 1.27 | 1.32 | 1.32 | 1.27 |
| Flexural strength (kgf/cm²) | 2400 | 2300 | 2200 | 2050 | 1950 | 2200 |
| Flexural modulus (1,000 x kgf/cm²) | 110 | 105 | 100 | 75 | 73 | 100 |
| Flow length (mm) | 110 | 120 | 120 | 140 | 140 | 125 |
| Moldability | good | good | good | good | good | good |
| Warping (mm) | 1.9 | 1.8 | 1.8 | 1.5 | 1.5 | 1.8 |
| Plating adhesion | | | | | | |
| (1) normal state | 5B | 5B | 5B | 5B | 5B | 5B |
| (2) after heat cycle test | 5B | 5B | 5B | 5B | 5B | 5B |
| Flame class UL94 | equivalent to HB | equivalent to HB | equivalent to HB | equivalent to HB | equivalent to HB | equivalent to V-0 |

### Comparative Example 1

A resin composition was obtained from polyamide MXD6, polyamide 66, a carbon fiber and wollastonite in the mixing ratio shown in Table 4 (without using the rubber-containing, maleic anhydride-modified PPE) in the same manner as in Example 2.

Then, The so-obtained resin composition was injection-molded with an injection molding machine to obtain test pieces according to ASTM. Some of the test pieces were electrolessly plated according to the plating step A, and some of the test pieces were electrolessly plated according to the plating step B.

Table 4 shows the components of the composition, the mixing ratio of the components and the results of evaluation of the test pieces. In this Comparative Example, the test pieces showed insufficient adhesion to a plating formed by any one of the plating steps A and B.

### Comparative Example 2

The same maleic anhydride-modified PPE as that used in Example 2, polyamide MXD 6, polyamide 66, a glass fiber and mica (average particle diameter: 6 µm) were dry-blended with a tumbler in the mixing ratio shown in Table 4, and a composition was obtained from the resultant blend in the same manner as in Example 1.

The so-obtained resin composition was injection-molded with an injection molding machine to obtain test pieces according to ASTM. The test pieces were electrolessly plated in the same manner as in Example 1. Table 4 shows the components of the composition, the mixing ratio of the components and the results of evaluation of the test pieces.

The test pieces obtained in Comparative Examples 1 and 2 showed poor adhesion to a plating, or the compositions were insufficient for practical use.

### Comparative Example 3

Test pieces were prepared from the same polyamide MXD6 as that used in Example 2, modified PPE, a carbon fiber and wollastonite in the mixing ratio shown in Table 4 in the same manner as in Example 2, and evaluated in the same manner as in Example 2. In this Comparative Example, the composition was poor in flowability and unmoldable into a square plate.

### Comparative Example 4

Test pieces were prepared from the same polyamide MXD6 as that used in Example 2, polyamide 66, modified PPE, a rubber component, a carbon fiber and glass flakes in the mixing ratio shown in Table 4 in the same manner as in Example 2, and evaluated in the same manner as in Example 2. Table 4 shows the results.

**Table 4**

| COMPARATIVE EXAMPLE NO. | 1 | 2 | 3 | 4 |
|---|---|---|---|---|
| COMPONENT & CONTENT | | | | |
| Polyamide MXD6 | 90 | 50 | 10 | 50 |
| Polyamide 66 | 10 | 10 | - | 10 |
| Modified PPE | - | 35 | 90 | 35 |
| Rubber component | - | 5 | - | 5 |
| Carbon fiber | 10 | - | 10 | 10 |
| Glass fiber | - | 15 | - | - |
| Wollastonite | 10 | - | 10 | - |
| Mica | - | 10 | - | - |
| Glass flakes | - | - | - | 10 |
| Specific gravity | 1.35 | 1.34 | 1.20 | 1.27 |
| Flexural strength (kgf/cm²) | 2600 | 2000 | 1800 | 2300 |
| Flexural modulus (1,000 x kgf/cm²) | 130 | 75 | 90 | 105 |
| Flow length (mm) | 170 | 140 | 50 | 110 |
| Moldability | good | good | poor | good |
| Warping (mm) | 3.0 | 1.4 | - | 1.8 |
| Plating adhesion (normal state) | 0B | 0B | 3B | 0B |

## Claims

1. A polyamide resin composition having electroless platability,
(A) which comprises;
(a) a xylylene group-containing polyamide resin,
(b) a modified polyphenylene ether resin obtained by reacting a polyphenylene resin with an unsaturated aliphatic carboxylic acid or an anhydride thereof,
(c) at least one member selected from the group consisting of a carbon fiber and a glass fiber, and
(d) at least one member selected from the group consisting of a potassium titanate fiber, wollastonite and calcined kaolin,
(B) wherein per 100 parts by weight of the above components (a) and (b), the amount of the component (a) is 30 to 80 parts by weight, the amount of the component (b) is 70 to 20 parts by weight, the amount of the component (c) is 5 to 30 parts by weight and the amount of the component (d) is 5 to 25 parts by weight.

2. A polyamide resin composition as claimed in claim 1 which further comprises
(e) a hydrogenated, A-B-A type block copolymer elastomer, in which each of A's is a polymer block of a vinyl aromatic hydrocarbon and B is a polymer block of a conjugated diene hydrocarbon, in an amount of 1 to 15 parts by weight per 100 parts by weight of components (a) and (b).

3. A polyamide resin composition as claimed in claim 1 or claim 2 which comprises, instead of component (a), (a') a polyamide resin containing 40 to 99% by weight of a xylylene group-containing polyamide resin and 60 to 1% by weight of polyamide 66.

4. A polyamide resin composition as claimed in any of claims 1 to 3, which shows a bar flow length, as a flowability index of a resin composition, of at least 100 mm, measured by flowing it in a cavity having a depth of 1 mm and a width of 20 mm at a resin temperature of 280°C, at a mold temperature of 130°C at an injection pressure of 1,100 kgf/cm², and has a flexural modulus of at least 70,000 kgf/cm² and a specific gravity of not more than 1.45.

5. An electrolessly plated, shaped article of the polyamide resin composition recited in any of claims 1 to 4.

## Patentansprüche

1. Polyamid-Harz-Zusammensetzung mit stromloser Plattierbarkeit
(A) enthaltend
(a) ein Xylylengruppen enthaltendes Polyamidharz,
(b) ein modifiziertes Polyphenylenetherharz, erhalten durch Umsetzung eines Polyphenylenharzes mit einer ungesättigten aliphatischen Carbonsäure oder einem Anhydrid davon,
(c) wenigstens ein Mitglied, ausgewählt aus der Gruppe bestehend aus Kohlenstoff-Faser und Glasfaser, und
(d) wenigstens ein Mitglied, ausgewählt aus der Gruppe bestehend aus Kaliumtitanatfaser, Wollastonit und kalziniertem Kaolin,
(B) wobei pro 100 Gewichtsteilen der obigen Komponenten (a) und (b) die Menge der Komponente (a) 30 bis 80 Gewichtsteile, die Menge der Komponente (b) 70 bis 20 Gewichtsteile, die Menge der Komponente (c) 5 bis 30 Gewichtsteile und die Menge der Komponente (d) 5 bis 25 Gewichtsteile sind.

2. Polyamid-Harz-Zusammensetzung nach Anspruch 1, dadurch gekennzeichnet, daß sie weiter enthält:
(e) ein hydriertes Blockcopolymer-Elastomer vom Typ A-B-A, bei welchem jedes A ein Polymerblock eines Phenyl-aromatischen Kohlenwasserstoffes und B ein Polymerblock eines konjugierten Dienkohlenwasserstoffes ist und zwar in einer Menge von 1 bis 15 Gewichtsteilen pro 100 Gewichtsteile der Komponenten (a) und (b).

3. Polyamid-Harz-Zusammensetzung nach Anspruch 1 oder 2, dadurch gekennzeichnet, daß sie anstelle der Komponente (a) enthält:
(a') ein Polyamidharz, enthaltend 40 bis 99 Gew.-% eines Xylylengruppen enthaltenden Polyamidharzes und 60 bis 1 Gew.-% Polyamid 66.

4. Polyamid-Harz-Zusammensetzung nach irgendeinem der Ansprüche 1 bis 3, dadurch gekennzeichnet, daß sie eine Stabfließlänge, als Fließfähigkeitsindex einer Harzzusammensetzung, von zumindest 100 mm, gemessen durch Einfließenlassen desselben in eine Füllung mit einer Tiefe von 1 mm und einer Breite von 20 mm bei einer Harztemperatur von 280°C, einer Formtemperatur von 130°C bei einem Einspritzdruck von 1100 kgf/cm² und einen Biegemodul von wenigstens 70000 kgf/cm² und ein spezifisches Gewicht von nicht mehr als 1,45 zeigt.

5. Stromlos plattiertes geformtes Erzeugnis aus der Polyamid-Harz-Zusammensetzung nach irgendeinem der Ansprüche 1 bis 4.

## Revendications

1. Composition de résine polyamide ayant une aptitude à recevoir un dépôt autocatalytique,
(A) qui comprend:
(a) une résine polyamide contenant un groupe xylylène,
(b) une résine de type éther de polyphénylène modifiée obtenue en faisant réagir une résine polyphénylène avec un acide carboxylique aliphatique insaturé ou un de ses anhydrides,
(c) au moins un élément choisi dans le groupe formé par une fibre de carbone et une fibre de verre, et
(d) au moins un élément choisi dans le groupe formé par une fibre de titanate de potassium, la wollastonite et le kaolin calciné,
(B) dans laquelle pour 100 parties en poids des composants ci-dessus (a) et (b), la quantité du composant (a) est comprise entre 30 et 80 parties en poids, la quantité du composant (b) est comprise entre 70 et 20 parties en poids, la quantité du composant (c) est comprise entre 5 et 30 parties en poids et la quantité du composant (d) est comprise entre 5 et 25 parties en poids.

2. Composition de résine polyamide selon la revendication 1, qui comprend de plus:
(e) un élastomère hydrogéné copolymère séquencé de type A-B-A, dans lequel chaque A est une séquence polymère d'un hydrocarbure vinylique aromatique et B est une séquence polymère d'un hydrocarbure diène conjugué, à raison de 1 à 15 parties en poids pour 100 parties en poids des composants (a) et (b).

3. Composition de résine polyamide selon la revendication 1 ou 2, qui comprend, au lieu du composant (a),
(a') une résine polyamide contenant 40 à 99% en poids d'une résine polyamide contenant un groupe xylylène et 60 à 1% en poids de polyamide 66.

4. Composition de résine polyamide selon l'une quelconque des revendications 1 à 3, qui présente une longueur d'écoulement en barre, en tant qu'indice de fluidité d'une composition de résine, d'au moins 100 mm, mesurée en la faisant écouler dans une cavité ayant une profondeur de 1 mm et une largeur de 20 mm à une température de résine de 280°C, à une température de moule de 130°C, sous une pression d'injection de 1 100 kgf/cm², et qui possède un module de flexion d'au moins 70 000 kgf/cm² et une densité ne dépassant pas 1,45.

5. Article façonné, plaqué de manière autocatalytique de la composition de résine polyamide selon l'une quelconque des revendications 1 à 4.
